# EUROPEAN PATENT SPECIFICATION

(11) **EP 0 449 362 B1**
(45) Date of publication and mention of the grant of the patent: **01.06.1994**
(21) Application number: 91200641.8
(22) Date of filing: 22.03.1991
(51) Int. Cl.: A01B 33/08

(54) **A soil cultivating machine**
Bodenbearbeitungsmaschine
Machine pour le travail du sol

(30) Priority: 26.03.1990 NL 9000704
(43) Date of publication of application: 02.10.1991
(73) Proprietor: C. van der Lely N.V., NL-3155 PD Maasland (NL)
(72) Inventor: van der Lely, Cornelis, Zug (CH)
(74) Representative: Mulder, Herman

(56) References cited:
- EP-A- 0 264 994
- GB-A- 2 147 784
- NL-A- 7 809 223

## Description

The present invention relates to a soil cultivating machine or similar machine comprising a hollow frame and soil working members which are rotatable about upwardly directed shafts and are drivable by gearwheels which are mounted on said shafts inside the frame, the gearwheels of adjacent soil working members being in direct meshing contact.

A machine of the above defined type is e.g. known from the EP-A-0 264 994.

When machines of this type get out of order, it is difficult to repair them in an efficient manner. Known implements of the above kind usually have an upper cover plate that is connected to the hollow frame by bolts or like fastenings. When e.g. a gearwheel breaks down and it has to be replaced, every bolt of the cover plate must be unscrewed, to get entry to the inner part of the hollow frame. The invention has for its object to provide a construction of such a soil cultivating machine that can be repaired in a relatively easy way, the construction further being such that the hollow frame will not be extensively weakened.

In a first solution according to the invention, the above-defined machine is characterized in that the frame includes a lower wall which is provided with apertures, an aperture having such a shape that a soil working member together with the relevant shaft and gearwheel can be removed from the frame and/or be placed thereinto as an integral unit, whereby the gearwheel is passed through said aperture at an oblique angle. In a second solution according to the invention, the machine as described in the preamble is characterized in that the frame includes a number of frame sections forming a lower wall of bottom plates, which frame sections are interconnected by an upper wall, in that a frame section together with a soil working member, a relevant shaft and a gear wheel can be removed from the upper wall and/or be placed thereto as an integral unit. Should repairs be necessary, the above respective measures render easy demounting and mounting possible, while in both cases the hollow frame will remain sufficiently strong.

In the NL-A-7809223 a soil working machine is described which differs from the machine as described in the preamble by the application of a drive, constituted by horizontally extending drivable shafts with conical gearwheels which are in meshing contact with conical gearwheels on the shafts of the soil working members. As the conical gearwheels on the shafts are not in direct meshing contact with each other, they can have a relatively small diameter, resulting in relatively small apertures in the lower wall of the hollow frame so that each of the soil working members together with a relevant shaft and conical gearwheel can easily be removed from the frame and/or be placed thereto as in integral unit. The concept of the machine described in the above NL-A-7809223 cannot directly be applied to a machine with a drive as described in the preamble without an extensively weakening of the hollow frame. As the gearwheels on the shafts of adjacent soil working members are in direct meshing contact of each other, the apertures in the lower wall have to be such that they form a single, relative large aperture which weakens the hollow frame in a large extend.

For a better understanding of the present invention and to show how the same may be carried into effect, reference will now be made, by way of example, to the accompanying drawings, in which:
Figure 1 is a plan view of a soil cultivating machine according to the invention;
Figure 2 is a view, to an enlarged scale, taken on the line II-II in Figure 1;
Figure 3 is a cross-sectional view taken on the line III-III in Figure 2;
Figure 4 is a cross-sectional view taken on the line IV-IV in Figure 3;
Figure 5 is a schematic view of a second embodiment of a soil cultivating machine according to the invention, and
Figure 6 is a cross-sectional view taken on the line VI-VI in Figure 5.

The implement shown in the drawings relates to a soil cultivating machine, in particular one for the preparation of a seed bed.

The machine comprises a hollow frame 1 which extends transversely to the direction of operative travel A. Inside the frame 1, which is of a box-like construction, there are bearing-supported, spaced apart equidistantly by e.g. 25 cms, the upwardly, preferably vertically, extending shafts 2 of soil working members 3. On that end of each shaft 2 projecting from the bottom of the frame there is mounted a carrier 4 which extends at least substantially horizontally and whose ends are provided with downwardly extending soil working elements 5 in the form of tines. The ends of the hollow frame 1 are closed by means of plates 6 which extend upwardly and at least substantially parallel to a vertical plane in the direction of operative travel A of the machine. Each of the plates is provided near its leading side with a bolt 7 which extends transversely to the direction of operative travel A, the arrangement being such that the longitudinal centre lines of the respective bolts 7 are in alignment. About each of the bolts 7 there is freely pivotal an arm 8 extending rearwardly along the inner side of a plate 6. By means of an adjusting device, which is located, near the trailing side of the frame 1 and in this embodiment is constituted by a threaded spindle 9, each arm 8 can be adjusted to and be locked into a plurality of positions. Between the ends of the arms 8 there is arranged freely rotatably a roller 10 in the form of a packer roller. The roller 10 includes a central cylindrical carrier, the ends of which are supported freely rotatably in the arms 8 by means of shafts and bearings accommodated in bearing housings.

Inside the box-like frame 1, each of the shafts 2 of a soil working member 3 is fitted with a cylindrical gearwheel (11), the arrangement being such that the gearwheels 11 on the shafts 2 of adjacent soil working members are in driving connection with each other. Near the centre of the machine, the shaft 2 of the soil working member is extended upwardly and reaches to into a gear box 12, inside which the extension is in connection via a conical gearwheel transmission with a shaft which extends in the direction of operative travel A and is in driving connection via a speed variator 13, located at the rear side of the gear box 12, with a superjacent shaft 14 which, seen in plan view, is located above the centre of the box-like frame 1, extends in the direction of operative travel A and projects from the gear box at the front side as well as at the rear side. Using an intermediate shaft 15, the shaft 14 can be coupled to the power take-off shaft of a tractor. The front side of the frame 1 is provided with a trestle 16 which has a three-point connection for coupling to the three-point lifting hitch of a tractor.

Each of the soil working members 3 is connected rigidly to a relevant shaft 2 by means of its carrier 4. Preferably, the shaft 2 is welded onto the carrier 4. A relevant gearwheel 11 is mounted onto the upper end of the shaft 2, preferably by means of splines. The shaft 2 is supported in two bearings 18 and 19 accommodated in one bearing housing 17. The spacing between the two bearings 18 and 19 is such that ball bearings can be chosen therefor; of course, the use of conical roller bearings remains also possible. At its bottom side, the bearing housing 17 is closed by a sealing ring 20. The outer wall of the bearing housing 17 is provided with a flange-like element 21 which, preferably, constitutes an integral whole therewith.

The frame 1 includes an upper wall 22 and a lower wall 23, the lower wall being assembled from a larger number of sections than the upper wall. In the embodiment shown, the upper wall is constituted by one single connecting plate. The lower wall 23 is provided with apertures and the above-mentioned flange-like elements 21 to be arranged around these apertures. The side wall 25 of the frame constitutes an integral whole with the lower wall 23 thereof and is bolted by means of bolts 26 to the upper wall 22 of the frame. The flange-like elements 21 are bolted by means of bolts 27 to the apertured lower wall 23, so that the integral unit of soil working member 3 cum shaft 2 and gearwheel 11 is supported exclusively in the lower wall 23 of the frame 1.

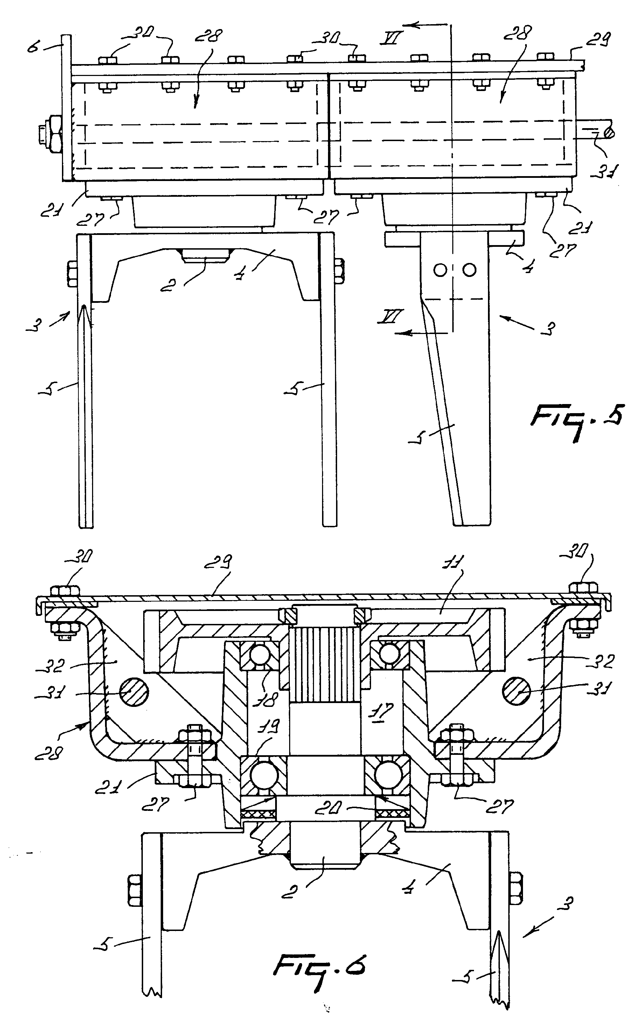

This construction renders it possible for the soil working member 3 cum shaft 2 and gearwheel 11 to be removed from the frame and/or to be placed thereinto as an integral unit. The dimension of the aperture in the frame must then be such that therethrough can be passed the portion of the integral unit of soil working member cum shaft and gearwheel to be removed from the frame and/or to be placed thereinto. In the embodiment shown, the bearing housing 17 can be removed from the frame and/or be placed thereinto simultaneously with the soil working member cum shaft and gearwheel. Therefore, the apertures in the bottom wall are of such a dimension that at least the upper portion of the bearing housing 17 and the gearwheel 11 can be passed therethrough. Since the gearwheels 11 are cylindrical and the gearwheels of adjacent soil working members 3 mesh directly, these gearwheels are of such a dimension that in the substantially horizontal position which they normally assume inside the frame 1 they cannot be passed through the aperture in the lower wall 23. The apertures in the lower wall 23 are therefore of a smaller size in the longitudinal direction of the machine than in the direction perpendicular thereto, while, as is apparent from Figure 4, these apertures are of a somewhat oval or triangular shape. Furthermore, the hollow frame 1 should be of such a height that the gearwheel 11, of course together with the shaft 2, the bearing housing 17 and the soil working member 3, can be shifted downwardly to get detached from the adjacent gearwheels and thereafter be tilted such that it can be passed in an oblique position through the aperture in the lower wall 23.

The above-described construction renders demounting of the soil cultivating machine relatively simple; by simply loosening the bolts 27 the integral unit of soil working member 3 cum shaft 2, gearwheel 11 and bearing housing 17 can be moved downwardly, be tilted and be removed from the soil cultivating machine through the aperture provided in the bottom wall 23. For the integral unit to be mounted again, its gearwheel should be passed at an oblique angle through the aperture into the frame, whereafter the integral unit is adjusted to the straight position and is shifted upwardly until the flange-like elements 21 attached to the outer wall of the bearing housing 17 contact the lower wall 23 and the bolts 27 can be tightened.

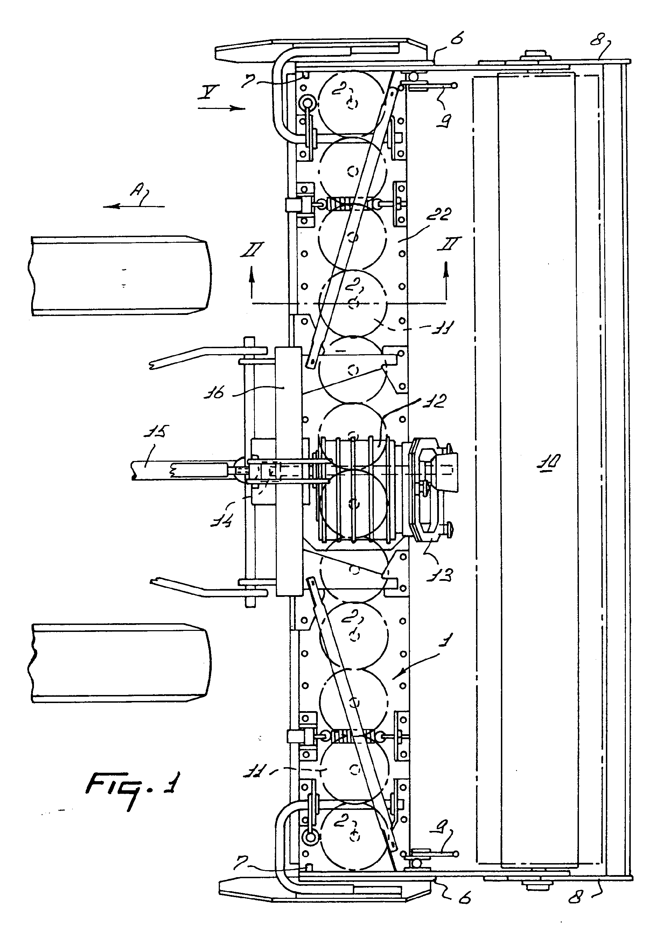

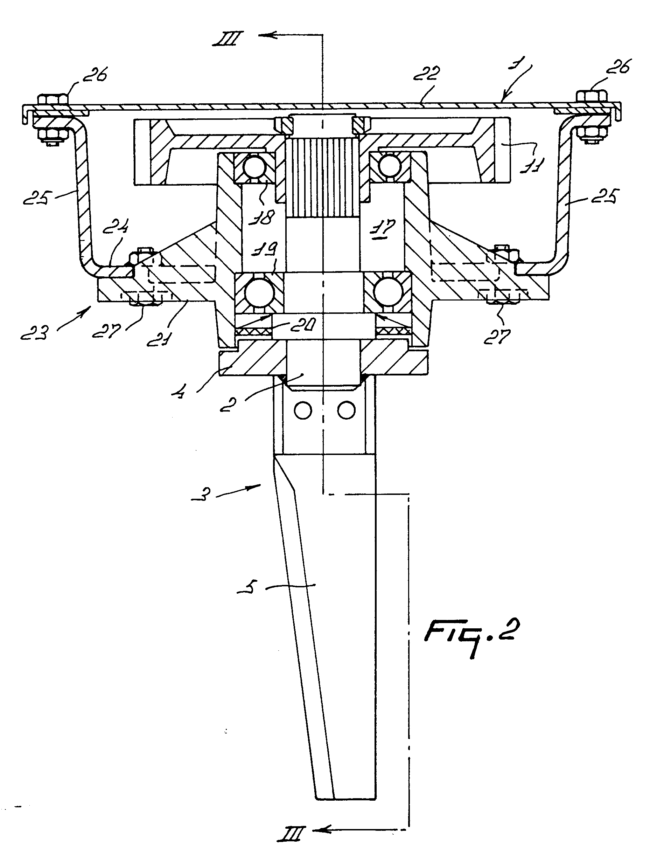

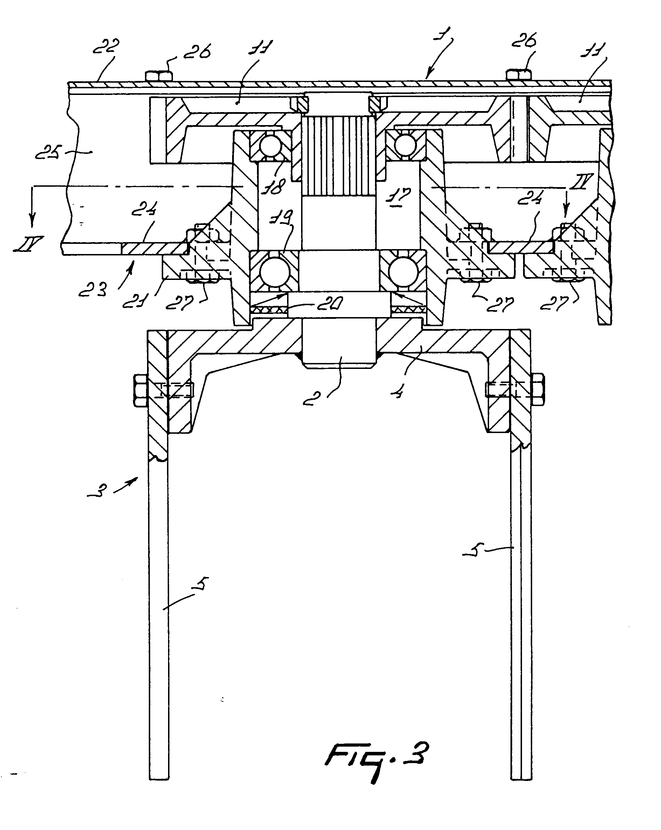

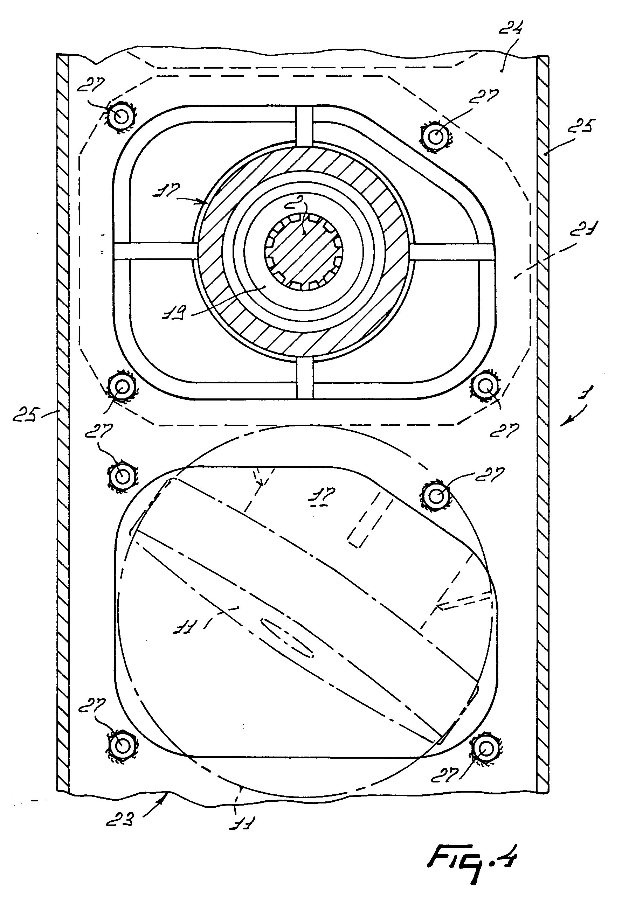

Figures 5 and 6 show a second embodiment, in which the integral unit of soil working member 3, shaft 2, gearwheel 11 and bearing housing 17 is assembled in practically the same manner as in the embodiment shown in Figures 1 to 4. The difference resides in the fact that here the frame 1 is assembled from separate sections 28 which at their upper sides are interconnected in the present embodiment by one plate. The individual frame sections 28 are bolted to this plate 29 by means of bolts 30, while furthermore they are pulled against each other by tensile rods 31, two rods being present in the embodiment shown. At their inner sides, the frame portions 28 are provided with struts 32. These struts are provided with apertures, through which the tensile rods 31 can be arranged. In this embodiment, it is not only possible for the integral unit of soil working member 3 cum shaft 2, gearwheel 11 and bearing housing 17 to be removed through apertured bottom plates 24 from the relevant frame section 28 and/or to be placed thereinto by loosening the bolts 27, but it is also possible for the relevant frame section 28 together with the said integral unit (3, 2, 11, 17) in its totality to be removed from the machine and/or to be placed thereinto by loosening the bolts 30, by means of which the relevant frame section 28 is fitted to the plate 29, and by withdrawing the tensile rods 31. The modular structure of the soil cultivating machine thus obtained renders such a machine particularly easy to repair.

The invention is not limited to the features described in the foregoing, but also relates to all the details shown in the drawings, whether they have been described or not, in so far as they fall under the scope of the claims.

## Claims

1. A soil cultivating machine or similar machine comprising a hollow frame (1) and soil working members (3) which are rotatable about upwardly directed shafts (2) and are drivable by gearwheels (11) which are mounted on said shafts (2) inside the frame (1), the gearwheels (11) of adjacent soil working members (3) being in direct meshing contact, characterized in that the frame (1) includes a lower wall (23) which is provided with apertures, an aperture having such a shape that a soil working member (3) together with the relevant shaft (2) and gearwheel (11) can be removed from the frame (1) and/or be placed thereinto as an integral unit, whereby the gearwheel is passed through said aperture at an oblique angle.

2. A soil cultivating machine as claimed in claim 1, characterized in that the apertures in the longitudinal direction of the machine are of a smaller dimension than in the direction perpendicular thereto.

3. A soil cultivating machine as claimed in claim 1 or 2, characterized in that the apertures have a more or less oval or triangular shape.

4. A soil cultivating machine as claimed in any one of the preceding claims, characterized in that the frame (1) is located transversely to the direction of operative travel (A) when the machine is in operation, the soil working members (3) and the corresponding apertures in the frame (1) being provided in a side-by-side relationship, while the soil working members are mounted to a plate, extending over the working width of the machine.

5. A soil cultivating machine or similar machine comprising a hollow frame (1) and soil working members (3) which are rotatable about upwardly directed shafts (2) and are drivable by gearwheels (11) which are mounted on said shafts (2) inside the frame (1), the gearwheels (11) of adjacent soil working members (3) being in direct meshing contact, characterized in that the frame (1) includes a number of frame sections (28) forming a lower wall (23) of bottom plates (24), which frame sections are interconnected by an upper wall (29), and in that a frame section (28) together with a soil working member, a relevant shaft and a gear wheel can be removed from the upper wall (29) and/or be placed thereto as an integral unit.

6. A soil cultivating machine as claimed in claim 5, characterized in that the upper wall (29) of the hollow frame (1) is constituted by one single connecting plate.

7. A soil cultivating machine as claimed in claim 6, characterized in that the frame sections (28) are attached to the plate (29) by means of bolts (30).

8. A soil cultivating machine as claimed in claim 6 or 7, characterized in that the frame sections (28) are pulled against each other by one or more tensile rods (31).

9. A soil cultivating machine as claimed in claim 8, characterized in that the frame sections (28) comprise struts (32) provided with apertures, through which tensile rods (31) can be arranged.

10. A soil cultivating machine as claimed in claim 8 or 9, characterized in that two tensile rods (31) are present.

11. A soil cultivating machine as claimed in any one of the preceding claims, characterized in that the shaft (2) of a soil working member (3) is bearing-supported in two bearings (18, 19) accommodated in one bearing housing (17).

12. A soil cultivating machine as claimed in claim 11, characterized in that the soil working member (3) includes a carrier (4) which is rigidly fitted to the relevant shaft (2) and soil working elements (5) attached thereto, while the bearings (18, 19) are positioned between the gearwheel (11) and the carrier (4).

13. A soil cultivating machine as claimed in claim 12, characterized in that the shaft (2) is welded onto the carrier (4).

14. A soil cultivating machine as claimed in any one of the preceding claims, characterized in that the gearwheel (11) is mounted on the shaft (2) by means of splines.

15. A soil cultivating machine as claimed in any one of the preceding claims, characterized in that the soil working members (3) are bearing-supported exclusively in the lower wall (23) of the frame (1).

16. A soil cultivating machine as claimed in any one of the preceding claims, characterized in that for the passing through of a gearwheel (11) in the lower wall (23) of the frame (1) there is provided an aperture of a size exceeding that of the bearing housing (17) of a soil working member (3).

17. A soil cultivating machine as claimed in any one of claims 12 to 16, characterized in that the lower wall (23) includes a bottom plate provided with apertures and flange-like elements (21) to be arranged around these apertures, each of which flange-like elements (21) per se constituting part of an integral unit of soil working member (3) with shaft (2), bearing housing (17) and gearwheel (11) to be removed from the frame (1) and/or to be placed thereinto through a relevant aperture.

18. A soil cultivating machine as claimed in claim 17, characterized in that a flange-like element (21) constitutes an integral whole with the outer wall of a relevant bearing housing (17).

19. A soil cultivating machine as claimed in claim 17 or 18, characterized in that a flange-like element (21) is bolted to the bottom plate by means of bolts (27), and that by simply loosening these bolts (27) the integral unit of soil working member (3) with shaft (2), bearing housing (17) and gearwheel (11) can be removed from the soil cultivating machine.

20. A soil cultivating machine as claimed in any one of the preceding claims, characterized in that the vertical side wall of the frame (1) constitutes an integral whole with the lower wall (23) thereof and is bolted to the upper wall (22) thereof by means of bolts (30).

21. A soil cultivating machine as claimed in claim 20, characterized in that the upper wall (22) of the frame (1) is provided with folded-over edges.

## Patentansprüche

1. Bodenbearbeitungsmaschine oder dergleichen mit einem Kastenbalken (1) und mit Bodenbearbeitungsgliedern (3), die um aufwärts gerichtete Wellen (2) drehbar und von Zahnrädern (11) anzutreiben sind, die innerhalb des Kastenbalkens (1) an den Wellen (2) befestigt sind, wobei die Zahnräder (11) von benachbarten Bodenbearbeitungsgliedern (3) unmittelbar ineinander eingreifen,
dadurch gekennzeichnet, daß der Kastenbalken (1) einen Boden (23) hat, der mit Öffnungen versehen ist, wobei eine Öffnung derart geformt ist, daß ein Bodenbearbeitungsglied (3) mit zugehöriger Welle (2) und Zahnrad (11) als komplette Einheit aus dem Kastenbalken (1) zu entfernen und/oder in ihn einzusetzen ist, und wobei das Zahnrad in einem schrägen Winkel durch die Öffnung hindurchzuführen ist.

2. Bodenbearbeitungsmaschine nach Anspruch 1,
dadurch gekennzeichnet, daß die Öffnungen in Längsrichtung der Maschine schmaler sind als in zu dieser Richtung senkrechter Richtung.

3. Bodenbearbeitungsmaschine nach Anspruch 1 oder 2,
dadurch gekennzeichnet, daß die Öffnungen eine mehr oder weniger ovale oder dreieckige Form aufweisen.

4. Bodenbearbeitungsmaschine nach einem der vorhergehenden Ansprüche,
dadurch gekennzeichnet, daß der Kastenbalken (1) im Betrieb der Maschine quer zur Arbeitsrichtung (A) liegt, wobei die Bodenbearbeitungsglieder (3) und die entsprechenden Öffnungen in dem Kastenbalken (1) nebeneinander angeordnet sind, während die Bodenbearbeitungsglieder an einer Platte befestigt sind, die sich über die Arbeitsbreite der Maschine erstreckt.

5. Bodenbearbeitungsmaschine oder dergleichen mit einem Kastenbalken (1) und Bodenbearbeitungsgliedern (3), die um aufwärts gerichtete Wellen (2) drehbar und von Zahnrädern (11) anzutreiben sind, die innerhalb des Kastenbalkens (1) an den Wellen (2) befestigt sind, wobei die Zahnräder (11) von benachbarten Bodenbearbeitungsgliedern (3) unmittelbar ineinander eingreifen,
dadurch gekennzeichnet, daß der Kastenbalken (1) mehrere Balkenabschnitte (28) aufweist, die einen aus Bodenplatten (24) bestehenden Boden (23) bilden, wobei die Balkenabschnitte durch eine Deckwand (29) miteinander verbunden sind, und daß ein Balkenabschnitt (28) zusammen mit einem Bodenbearbeitungsglied, einer zugehörigen Welle und einem Zahnrad als komplette Einheit von der Deckwand (29) zu entfernen und/oder an ihr anzubringen ist.

6. Bodenbearbeitungsmaschine nach Anspruch 5,
dadurch gekennzeichnet, daß die Deckwand (29) des Kasten- balkens (1) durch eine einzelne Verbindungsplatte gebildet ist.

7. Bodenbearbeitungsmaschine nach Anspruch 6,
dadurch gekennzeichnet, daß die Balkenabschnitte (28) an der Platte (29) mittels Schrauben (30) befestigt sind.

8. Bodenbearbeitungsmaschine nach Anspruch 6 oder 7,
dadurch gekennzeichnet, daß die Balkenabschnitte (28) durch einen oder mehrere Zuganker (31) gegeneinander verspannt sind.

9. Bodenbearbeitungsmaschine nach Anspruch 8,
dadurch gekennzeichnet, daß die Balkenabschnitte (28) mit Aussteifungen (32) versehen sind, die Öffnungen aufweisen, durch welche Zuganker (31) hindurchzuführen sind.

10. Bodenbearbeitungsmaschine nach Anspruch 8 oder 9,
dadurch gekennzeichnet, daß zwei Zuganker (31) vorhanden sind.

11. Bodenbearbeitungsmaschine nach einem der vorhergehenden Ansprüche,
dadurch gekennzeichnet, daß die Welle (2) eines Bodenbearbeitungsgliedes (3) in zwei in einem Lagergehäuse (17) angeordneten Lagern (18, 19) gelagert und abgestützt ist.

12. Bodenbearbeitungsmaschine nach Anspruch 11,
dadurch gekennzeichnet, daß das Bodenbearbeitungsglied (3) einen Träger (4) aufweist, der an der zugehörigen Welle (2) starr befestigt ist, und an dem Bodenbearbeitungselemente (5) angeordnet sind, wobei die Lager (18, 19) zwischen dem Zahnrad (11) und dem Träger (4) positioniert sind.

13. Bodenbearbeitungsmaschine nach Anspruch 12,
dadurch gekennzeichnet, daß die Welle (2) an dem Träger (4) angeschweißt ist.

14. Bodenbearbeitungsmaschine nach einem der vorhergehenden Ansprüche,
dadurch gekennzeichnet, daß das Zahnrad (11) an der Welle (2) mittels Nuten befestigt ist.

15. Bodenbearbeitungsmaschine nach einem der vorhergehenden Ansprüche,
dadurch gekennzeichnet, daß die Bodenbearbeitungsglieder (3) ausschließlich an dem Boden (23) des Kastenbalkens (1) gelagert und abgestützt sind.

16. Bodenbearbeitungsmaschine nach einem der vorhergehenden Ansprüche,
dadurch gekennzeichnet, daß zum Durchtritt eines Zahnrades (11) in dem Boden (23) des Kastenbalkens (1) eine Öffnung vorgesehen ist, die größer ist als das Lagergehäuse (17) eines Bodenbearbeitungsgliedes (3).

17. Bodenbearbeitungsmaschine nach einem der Ansprüche 12 bis 16,
dadurch gekennzeichnet, daß der Boden (23) eine Bodenplatte aufweist, die mit Öffnungen versehen ist, und daß Flansche (21) vorgesehen sind, die so anzuordnen sind, daß sie diese Öffnungen umgeben, wobei jeder Flansch (21) für sich Teil einer kompletten Einheit aus Bodenbearbeitungsglied (3) mit Welle (2), Lagergehäuse (17) und Zahnrad (11) ist, die durch eine entsprechende Öffnung aus dem Kastenbalken (1) zu entfernen und/oder in ihn einzusetzen ist.

18. Bodenbearbeitungsmaschine nach Anspruch 17,
dadurch gekennzeichnet, daß ein Flansch (21) mit der Außenwand eines zugehörigen Lagergehäuses (17) einstückig ausgebildet ist.

19. Bodenbearbeitungsmaschine nach Anspruch 17 oder 18,
dadurch gekennzeichnet, daß ein Flansch (21) mittels Schrauben (27) an der Bodenplatte angeschraubt ist, und daß durch bloßes Lösen dieser Schrauben (27) die komplette Einheit aus Bodenbearbeitungsglied (3) mit Welle (2), Lagergehäuse (17) und Zahnrad (11) aus der Bodenbearbeitungsmaschine zu entfernen ist.

20. Bodenbearbeitungsmaschine nach einem der vorhergehenden Ansprüche,
dadurch gekennzeichnet, daß die vertikale Seitenwand des Kastenbalkens (1) mit dessen Boden (23) einstückig ausgebildet und an dessen Deckwand (22) mittels Schrauben (30) angeschraubt ist.

21. Bodenbearbeitungsmaschine nach Anspruch 20,
dadurch gekennzeichnet, daß die Deckwand (22) des Kastenbalkens (1) mit umgebogenen Kanten versehen ist.

## Revendications

1. Machine pour cultiver le sol, ou machine similaire, comprenant un châssis creux (1) et des organes de travail du sol (3) qui sont rotatifs autour d'arbres (2) dirigés vers le haut et sont entraînés par des engrenages (11) qui sont montés sur lesdits arbres (2) à l'intérieur du châssis (1), les engrenages (11) d'organes de travail du sol (3) adjacents étant en contact d'engrènement direct,
**caractérisée** en ce que le châssis (1) comporte une paroi inférieure (23) qui est munie d'ouvertures, une ouverture ayant une forme telle qu'un organe de travail du sol (3), ensemble avec l'arbre (2) et l'engrenage (11) correspondants, puisse être retiré du châssis (1) et/ou y être introduit comme une unité intégrale, l'engrenage passant à travers ladite ouverture sous un angle oblique.

2. Machine pour cultiver le sol selon la revendication 1, caractérisée en ce que les ouvertures sont d'une dimension plus petite dans le sens longitudinal de la machine que dans le sens perpendiculaire à celui-ci.

3. Machine pour cultiver le sol selon la revendication 1 ou 2, caractérisée en ce que les ouvertures ont une forme plus ou moins ovale ou triangulaire.

4. Machine pour cultiver le sol selon l'une quelconque des revendications précédentes, caractérisée en ce que le châssis (1) est situé transversalement au sens de marche (A) du travail quand la machine est en fonctionnement, les organes de travail du sol (3) et les ouvertures correspondantes dans le châssis (1) étant prévus dans une disposition côte à côte, tandis que les organes de travail du sol sont montés sur une plaque s'étendant sur la largeur de travail de la machine,

5. Machine pour cultiver le sol, ou machine similaire, comprenant un châssis creux (1) et des organes de travail du sol (3) qui sont rotatifs autour d'arbres (2) dirigés vers le haut et sont entraînés par des engrenages (11) qui sont montés sur lesdits arbres (2) à l'intérieur du châssis (1), les engrenages (11) d'organes de travail du sol (3) adjacents étant en contact d'engrènement direct,
**caractérisée** en ce que le châssis (1) comporte un certain nombre de sections de châssis (28) formant une paroi inférieure (23) formée de plaques de fond (24), ces sections de châssis étant interconnectées par une paroi supérieure (29) et en ce qu'une section de châssis (28) ensemble avec un organe de travail du sol, un arbre et un engrenage correspondants, puisse être retirés de la paroi supérieure (29) et/ou y être placée comme une unité intégrale.

6. Machine pour cultiver le sol selon la revendication 5, caractérisée en ce que la paroi supérieure (29) du châssis creux (1) est constituée par une unique plaque de connexion.

7. Machine pour cultiver le sol selon la revendication 6, caractérisée en ce que les sections (28) du châssis sont attachées à la plaque (29) au moyen de boulons (30).

8. Machine pour cultiver le sol selon la revendication 6 ou 7, caractérisée en ce que les sections (28) du châssis sont tirées l'une contre l'autre par une ou plusieurs barres de traction (31).

9. Machine pour cultiver le sol selon la revendication 8, caractérisée en ce que des sections (28) du châssis comprennent des goussets (32) munis d'ouvertures à travers lesquelles des barres de traction (31) peuvent être disposées.

10. Machine pour cultiver le sol selon la revendication 8 ou 9, caractérisée en ce que deux barres de traction (31) sont présentes.

11. Machine pour cultiver le sol selon l'une quelconque des revendications précédentes, caractérisée en ce que l'arbre (2) d'un organe de travail du sol (3) est supporté en rotation dans deux paliers (18, 19) logés dans un même boîtier de paliers (17).

12. Machine pour cultiver le sol selon la revendication 11, caractérisée en ce que l'organe de travail du sol (3) comporte un support (4) qui est monté rigidement sur l'arbre (2) correspondant, et des éléments de travail du sol (5) attachés à celui-ci, tandis que les paliers (18, 19) sont positionnés sous les engrenages (11) et sous le support (4).

13. Machine pour cultiver le sol selon la revendication 12, caractérisée en ce que l'arbre (2) est soudé sur le support (4).

14. Machine pour cultiver le sol selon l'une quelconque des revendications précédentes, caractérisée en ce que l'engrenage (11) est monté sur l'arbre (2) au moyen de cannelures.

15. Machine pour cultiver le sol selon l'une quelconque des revendications précédentes, caractérisée en ce que les organes de travail du sol (3) sont supportés par des paliers, exclusivement dans la paroi inférieure (23) du châssis (1).

16. Machine pour cultiver le sol selon l'une quelconque des revendications précédentes, caractérisée en ce que, pour le passage d'un engrenage (11) à travers la paroi inférieure (23) du châssis, il est prévu une ouverture d'une taille dépassant celle du boîtier de paliers (17) d'un organe de travail du sol (3).

17. Machine pour cultiver le sol selon l'une quelconque des revendications 12 à 16, caractérisée en ce que la paroi inférieure (23) comporte une plaque de fond munie d'ouvertures et d'éléments (21) analogues à des brides destinés à être disposés autour de ces ouvertures, chacun de ces éléments (21) analogues à des brides constituant par lui-même une partie d'une unité intégrale d'organe de travail du sol (3) avec l'arbre (2), le boîtier de paliers (17) et l'engrenage (11) pour être retirée du châssis (1) et/ou pour être placée dans celui-ci à travers une ouverture correspondante.

18. Machine pour cultiver le sol selon la revendication 17, caractérisée en ce qu'un élément (21) analogue à une bride constitue un ensemble intégral avec la paroi extérieure d'un boîtier de paliers (17) correspondant.

19. Machine pour cultiver le sol selon la revendication 17 ou 18, caractérisée en ce qu'un élément (21) analogue à une bride est boulonné sur la plaque de fond au moyen de boulons (27), et en ce qu'en desserrant simplement ces boulons (27) l'unité intégrale composée de l'organe de travail du sol (3) avec l'arbre (2), le boîtier de paliers (17) et l'engrenage (11) peut être retirée de la machine pour cultiver le sol.

20. Machine pour cultiver le sol selon l'une quelconque des revendications précédentes, caractérisée en ce que la paroi latérale verticale du châssis (1) constitue un ensemble intégral avec la paroi inférieure (23) de celui-ci et est boulonnée avec la paroi supérieure (22) de celui-ci au moyen de boulons (30).

21. Machine pour cultiver le sol selon la revendication 20, caractérisée en ce que la paroi supérieure (22) du châssis (1) est munie de bords repliés.
